# FASCICULE DE BREVET EUROPEEN

(11) **EP 2 885 147 B1**
(45) Date de publication et mention de la délivrance du brevet: **24.08.2016**
(21) Numéro de dépôt: 13744664.7
(22) Date de dépôt: 28.06.2013
(51) Int. Cl.: B60K 6/52, B60W 20/00, B60K 31/00, B60W 10/11, B60W 10/08, B60W 10/26, B60W 30/188

(54) **PROCEDE DE LIMITATION DE COUPLE D'UNE MACHINE ELECTRIQUE DE VEHICULE HYBRIDE COMPORTANT UN SYSTEME DE CONTROLE DE VITESSE**
VERFAHREN ZUR BEGRENZUNG DES DREHMOMENTS EINER ELEKTRISCHEN MASCHINE EINES HYBRIDFAHRZEUGS MIT EINER DREHZAHLREGELUNGSSYSTEM
METHOD FOR LIMITING THE TORQUE OF AN ELECTRIC MACHINE OF A HYBRID VEHICLE COMPRISING A SPEED CONTROL SYSTEM

(30) Priorité: 16.08.2012 FR 1257816
(43) Date de publication de la demande: 24.06.2015
(73) Titulaire: Peugeot Citroën Automobiles SA, 78140 Vélizy-Villacoublay (FR)
(72) Inventeur: MILHAU, Yohan, F-78400 Chatou (FR); HECKETSWEILER, Thierry, F-92600 Asnieres Sur Seine (FR)
(86) Numéro de dépôt international: PCT/FR2013/051527
(87) Numéro de publication internationale: WO 2014/027153

(56) Documents cités:
- US-A1- 2007 114 084
- US-A1- 2009 145 673
- US-A1- 2009 234 549
- US-B1- 6 428 444
- US-B1- 7 836 986

## Description

La présente invention concerne pour un véhicule hybride comportant un moteur thermique de traction, et une machine électrique couplée à ce moteur thermique, qui peut recharger un dispositif de stockage de l'énergie électrique, elle concerne aussi un procédé de limitation du couple d'entraînement de cette machine, ainsi qu'un véhicule hybride mettant en oeuvre un tel procédé.

Une famille de véhicule hybride connu comporte un moteur thermique de traction qui peut être du type essence ou Diesel, entraînant les roues du train avant par une transmission comprenant différents rapports, couplé de manière permanente à une machine électrique avant qui peut fonctionner en moteur pour démarrer ce moteur thermique, et en génératrice pour recharger une batterie du réseau de bord ainsi qu'un dispositif de stockage de l'énergie électrique.

Le dispositif de stockage de l'énergie alimente une deuxième machine électrique arrière entraînant les roues du train arrière, qui peut aussi fonctionner en moteur pour délivrer un couple sur ces roues, ou en génératrice afin de récupérer l'énergie cinétique du véhicule, et de recharger ce dispositif de stockage. La deuxième machine électrique est reliée aux roues par un système de couplage, comme un crabot ou un embrayage.

D'une manière générale, le dispositif de stockage de l'énergie électrique, appelé par la suite batteries haute tension, peut comporter des cellules électrochimiques comprenant tous types de technologies, ou des condensateurs, regroupés en un ou plusieurs modules, et connectés entre eux en série ou en parallèle.

Pour certains de ces véhicules, les batteries peuvent être aussi rechargées sur un réseau de distribution d'électricité, après un raccordement sur ce réseau lors d'un arrêt du véhicule.

On peut ainsi réaliser différents modes de fonctionnement, comportant notamment un mode uniquement avec la motorisation électrique et sans émission de gaz polluants, appelé mode électrique ou mode « ZEV », un mode hybride et un mode sport associant les deux motorisations pour favoriser respectivement la consommation et les performances du véhicule, et un mode avec les quatre roues motrices permettant d'améliorer la motricité, la sécurité et la tenue de route de ce véhicule.

Un procédé de détermination du couple d'entraînement de la machine électrique avant, présenté notamment par le document US-B1-6484833, limite si nécessaire le couple prélevé par la machine électrique avant, afin de répondre aux demandes du conducteur quand le moteur thermique atteint son couple maximum. Deplus, le document US-A-2009/234549 divulgue un tel procédé. Toutefois, dans le cas d'un système automatique de régulation ou de limitation de la vitesse du véhicule, ce procédé ne présente pas de stratégie permettant de contrôler le couple prélevé par cette machine électrique avant, afin de respecter au mieux la demande de ce système automatique dans des conditions de confort acceptables.

La présente invention a notamment pour but d'éviter ces inconvénients de la technique antérieure.

Elle propose à cet effet pour un véhicule hybride, un procédé de limitation du couple prélevé par une première machine électrique liée à un moteur thermique de traction qui entraîne ce véhicule par une transmission comprenant différents rapports, cette première machine étant prévue pour alimenter en courant une batterie basse tension du réseau de bord du véhicule, ainsi qu'un dispositif de stockage de l'énergie qui délivre cette énergie à une deuxième machine électrique de traction, le véhicule comportant un système automatique de contrôle de sa vitesse pour la réguler ou la limiter, caractérisé en ce que dans le cas où le moteur thermique ne peut pas sur un même rapport de la transmission, en réponse à une demande du système automatique de contrôle de vitesse, délivrer une accélération du véhicule suffisante correspondant à un niveau de confort, il déleste alors la charge du dispositif de stockage de l'énergie, ou de la batterie basse tension du réseau de bord.

Un avantage du procédé de limitation de couple selon l'invention, est que l'on peut en délestant la charge destinée à l'alimentation du réseau de bord ou du dispositif de stockage d'énergie, et donc le couple prélevé par la première machine électrique, préserver un niveau de couple plus élevé disponible pour l'accélération du véhicule, ce qui peut permettre dans certains cas d'atteindre l'accélération de confort en évitant un changement de rapport de la transmission, ou en évitant d'utiliser la deuxième machine électrique de traction et donc de dépenser de l'énergie électrique.

Le procédé de limitation de couple comporte une première fonction d'estimation des efforts résistants, qui reçoit une information sur la vitesse du véhicule et sur le couple que fournit le moteur thermique et la deuxième machine électrique de traction, afin d'estimer les efforts résistants s'appliquant sur le véhicule au cours du roulage, cette estimation étant donnée à une fonction suivante de calcul de l'accélération maximum possible du véhicule sur le rapport engagé de la transmission, qui reçoit de plus une information sur le couple maximum ramené à la roue que peuvent délivrer les différentes motorisations dans leur état actuel de fonctionnement, afin de calculer cette accélération véhicule maximum possible.

L'accélération véhicule maximum possible est délivrée à une fonction suivante de calcul de l'accélération maximum de consigne, qui reçoit de plus une information d'accélération véhicule de confort définie par des cartographies en fonction de la vitesse du véhicule, et de l'écart entre la consigne de vitesse donnée par le système automatique de contrôle de vitesse, et la vitesse réelle de ce véhicule, cette fonction calculant le niveau d'accélération maximum de consigne disponible pour satisfaire aux demandes du système de contrôle de vitesse, en prenant la valeur la plus élevée entre l'accélération véhicule maximum possible et l'accélération véhicule de confort, cette accélération maximum de consigne étant délivrée à une fonction suivante de calcul de l'accélération de consigne, qui reçoit de plus une information sur l'accélération demandée par le système de contrôle de vitesse, pour calculer une accélération de consigne qui est cette valeur de l'accélération demandée par le système de contrôle, limitée par l'accélération maximum de consigne.

Le procédé de limitation de couple selon l'invention peut en outre comporter une ou plusieurs des caractéristiques suivantes, qui peuvent être combinées entre elles.

Avantageusement, le procédé de limitation de couple comporte une première étape comprenant une initialisation, qui vérifie si le moteur thermique est en fonctionnement et si le système de contrôle de vitesse est activé, pour passer à un premier critère qui vérifie si ce moteur thermique est capable de fournir le couple de consigne assurant l'accélération de confort avec le rapport de la transmission en cours d'utilisation, alors le procédé de limitation du couple s'active, dans le cas contraire ce procédé ne s'active pas et le fonctionnement du véhicule reste dans des conditions nominales, puis pour passer à un deuxième critère vérifiant si le moteur thermique n'est pas capable de respecter le couple de consigne sans aucun délestage, et si la consigne de vitesse véhicule est proche de la consigne de vitesse cible donnée par le système de contrôle de vitesse.

Avantageusement, le procédé de limitation de couple comporte une deuxième étape en cas d'activation du procédé de limitation du couple, comprenant un troisième critère sur le niveau de charge des batteries haute tension, qui effectue un premier délestage de cette charge si ce niveau est supérieur à un seuil prédéfini, et dans le cas de ce délestage un quatrième critère qui vérifie si le moteur thermique avec ce premier délestage est capable de respecter le couple de consigne construit avec le critère d'accélération de confort.

Avantageusement, le procédé de limitation de couple comporte une troisième étape dans le cas où le moteur thermique n'est pas capable de respecter le couple de consigne avec un maintien du premier délestage, ou après un arrêt de ce délestage en fonction de l'évolution du niveau de charge des batteries haute tension, et dans le cas où ce premier délestage n'est pas autorisé, cette troisième étape comprenant un deuxième délestage de la charge de la batterie basse tension, qui sera dans un premier temps effectué si le niveau de charge dans cette batterie est supérieur à un seuil prédéterminé suivant un cinquième critère, dans le cas de ce délestage, un sixième critère vérifie si le moteur thermique avec les délestages effectués est capable de respecter le couple de consigne.

Avantageusement, le procédé de limitation de couple comporte une quatrième étape dans le cas où le moteur thermique n'est pas capable de respecter le couple de consigne, avec un maintien du deuxième délestage, ou après un arrêt de ce délestage en fonction de l'évolution du niveau de charge de la batterie basse tension, et dans le cas où le deuxième délestage n'est pas autorisé, comprenant un septième critère qui détermine s'il est préférable de forcer l'engagement de la machine électrique arrière pour respecter l'accélération de confort, ou de passer à un rapport de la transmission donnant une démultiplication plus élevée.

L'invention a aussi pour objet un véhicule hybride disposant d'une première machine électrique couplée à un moteur thermique de traction qui entraîne ce véhicule par une transmission comprenant différents rapports, cette première machine étant prévue pour alimenter en courant une batterie basse tension du réseau de bord du véhicule, ainsi qu'un dispositif de stockage de l'énergie qui délivre cette énergie à une deuxième machine électrique de traction, le véhicule comportant un système automatique de contrôle de sa vitesse pour la réguler ou la limiter, ce véhicule mettant en oeuvre un procédé de limitation du couple prélevé par la première machine électrique comportant l'une quelconque des caractéristiques précédentes.

En particulier, le moteur thermique peut entraîner les roues avant, et la deuxième machine électrique entraîner les roues arrière.

L'invention sera mieux comprise et d'autres caractéristiques et avantages apparaîtront plus clairement à la lecture de la description ci-après, donnée à titre d'exemple et de manière non limitative en référence aux dessins annexés dans lesquels :
- la figure 1 est un schéma d'un véhicule hybride mettant en oeuvre le procédé de limitation du couple selon l'invention ;
- la figure 2 est un graphique présentant différentes fonctions de ce procédé ; et
- les figures 3 à 6 présentent de manière chronologique quatre étapes comprenant des critères de décision de ce procédé.

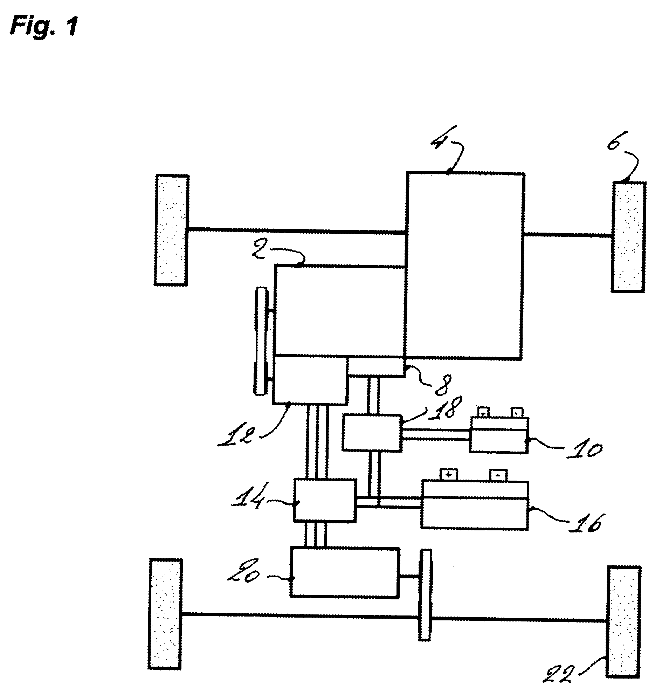

La figure 1 présente un véhicule hybride comportant un moteur thermique 2 entraînant des roues avant 6 par une boîte de vitesses 4 comprenant une commande automatique de passage des vitesses. Le moteur thermique 2 comporte un démarreur électrique 8, alimenté en courant par une batterie basse tension 10.

En variante, le moteur thermique 2 pourrait entraîner les roues avant 6 par d'autres types de transmission, comme une boîte de vitesses automatique « BVA », une transmission à variation continue du rapport « CVT », ou une boîte à double embrayage.

Une machine électrique avant 12 est couplée directement au moteur thermique 2, afin de l'assister dans son fonctionnement, et une machine électrique arrière 20 peut être couplée aux roues arrière 22 du véhicule par un dispositif de crabotage. Les deux machines électriques 12, 20 sont reliées à un onduleur 14, qui est lui-même relié à des batteries haute tension 16, permettant de recevoir ou de délivrer une puissance électrique importante.

Un convertisseur de courant DC-DC 18 est interposé entre la batterie basse tension 10 et les batteries haute tension 16, afin de recharger si nécessaire cette batterie basse tension à partir d'une énergie prélevée dans les batteries haute tension ou venant de l'onduleur 14, avec une adaptation de la tension du courant réalisée par le convertisseur.

Le véhicule hybride peut ainsi fonctionner avec différents modes de roulage, comprenant notamment un mode électrique utilisant la machine électrique arrière 20, le moteur thermique 2 étant arrêté et la boîte de vitesses 4 étant au point mort, un mode hybride utilisant les deux motorisations, un mode quatre roues motrices avec les deux motorisations, appelé aussi mode « E-AWD », ainsi qu'un mode sport.

Pour chaque motorisation, le couple maximal est le couple maximum qu'il peut délivrer en fournissant une puissance mécanique, et le couple minimal est le couple maximum qu'il peut prélever avec une consommation de puissance mécanique, en travaillant en frein moteur dans le cas du moteur thermique 2, ou comme un générateur électrique dans le cas des machines électriques 12, 20.

Le véhicule hybride comporte un système automatique de régulation ou de limitation de sa vitesse, appelé par la suite système de contrôle de vitesse, qui à la demande du conducteur agit sur les différentes motorisations 2, 20 et la boîte de vitesses 4, pour donner à ce véhicule une vitesse demandée par le conducteur, ou limiter sa vitesse à un seuil maximum.

La machine électrique avant 12 travaille en génératrice en prélevant un couple sur le moteur thermique 2, afin de fournir une petite puissance électrique délivrée généralement en permanence, au convertisseur de courant DC-DC 18 afin de maintenir dans le réseau de bord une tension minimum nécessaire à son fonctionnement.

La machine électrique avant 12 travaille aussi en génératrice en prélevant un couple afin de fournir une puissance électrique délivrée aux batteries haute tension 16 afin de les recharger pour maintenir un niveau suffisant de charge, permettant à la machine électrique arrière 20 de fournir à tout instant un couple moteur.

Le couple moteur venant de la machine électrique arrière 20, peut répondre notamment à des besoins de performances demandées par le conducteur, ce couple venant s'ajouter à celui délivré par le moteur thermique, à des besoins de motricité avec le mode quatre roues motrice E-AWD, ou à des besoins de sécurité demandés notamment par des systèmes d'aide à la conduite du type ABS ou ESP.

Le couple fourni par le moteur thermique 2 se décompose alors en un couple délivré sur les roues avant 6, et un couple délivré sur la machine électrique avant 12 qui sert à fournir d'une part une puissance électrique au convertisseur de courant DC-DC 18 pour la batterie basse tension 10, et d'autre part une puissance électrique aux batteries haute tension 16, qui peut être plus importante.

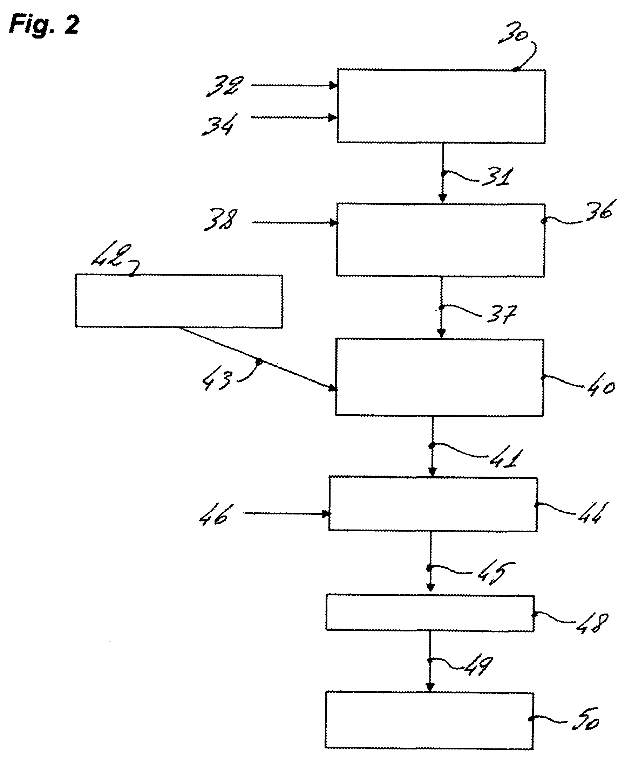

La figure 2 présente une première fonction d'estimation des efforts résistants 30, qui reçoit une information sur la vitesse du véhicule 32 et sur le couple que fournit le moteur thermique 34, afin d'estimer les efforts résistants 31 qui s'appliquent sur le véhicule au cours du roulage. Les efforts résistants 31 sont la somme des efforts aérodynamiques s'appliquant sur le véhicule, des efforts liés à la pente de la voie de circulation, et des efforts de roulement.

L'estimation des efforts résistants 31 est délivrée à une fonction suivante de calcul de l'accélération maximum possible du véhicule sur le rapport engagé de la boîte de vitesses 36, qui reçoit de plus une information sur le couple maximum ramené à la roue 38 que peuvent délivrer les différentes motorisations 2, 20 dans leur état actuel de fonctionnement, afin de calculer cette accélération véhicule maximum possible 37.

Pour rappel, on notera que l'accélération du véhicule est égale à la somme des forces s'appliquant dessus, divisée par sa masse.

L'accélération véhicule maximum possible 37 est délivrée à une fonction suivante de calcul de l'accélération maximum de consigne 40, qui reçoit de plus une information d'accélération véhicule de confort 43 définie par une fonction de calcul de l'accélération véhicule de confort 42.

La fonction de calcul de l'accélération véhicule de confort 42 utilise des cartographies pour, en fonction de la vitesse du véhicule, et de l'écart entre la consigne de vitesse donnée par le système de contrôle de vitesse, et la vitesse réelle de ce véhicule, déterminer un niveau d'accélération minimum acceptable 43 pour satisfaire la demande du conducteur dans des conditions confortables.

La fonction de calcul de l'accélération maximum de consigne 40 calcule le niveau d'accélération maximum de consigne 41 qui est disponible pour satisfaire aux demandes du système de contrôle de vitesse, en prenant la valeur la plus élevée entre l'accélération véhicule maximum possible 37, et l'accélération véhicule de confort 43.

L'accélération maximum de consigne 41 est délivrée à une fonction suivante de calcul de l'accélération de consigne 44, qui reçoit de plus une information sur l'accélération demandée par le système de contrôle de vitesse 46, pour calculer une accélération de consigne 45 qui est cette valeur de l'accélération demandée par ce système de contrôle, limitée par l'accélération maximum de consigne 41.

L'accélération de consigne 45 est délivrée à une fonction suivante de conversion en couple 48, qui calcule une consigne de couple 49 à appliquer sur les roues motrices pour obtenir cette accélération de consigne demandée. Et enfin la consigne de couple 49 est délivrée à la stratégie de gestion des points de fonctionnement des organes 50.

D'une manière générale, le procédé de limitation du couple prélevé par la machine électrique avant 12, lorsque le moteur thermique 2 ne peut pas répondre à la demande d'accélération du véhicule venant du système de contrôle de sa vitesse, en restant sur le même rapport de la boîte de vitesses 4 afin de préserver un confort de roulage, va délester d'abord le couple prélevé par la machine électrique avant 12, destiné à fournir une puissance électrique de recharge des batteries hautes tension 16.

Ce premier délestage de la charge des batteries haute tension 16 n'a pas d'incidence sur la consommation de carburant, il est autorisé suivant le niveau de charge de ces batteries, afin de conserver un niveau minimum de charge permettant d'assurer notamment la sécurité du véhicule.

Ensuite si l'accélération du véhicule n'est toujours pas suffisante, le procédé de limitation du couple va délester le couple destiné à la charge de la batterie basse tension 10 passant par le convertisseur de courant DC-DC 18, si le niveau d'énergie dans cette batterie est assez élevé afin de garantir le bon fonctionnement de ce réseau de bord.

Ensuite si ces délestages ne sont pas suffisants, le procédé peut imposer un engagement de la machine électrique arrière de traction 20 afin de délivrer un couple de traction additionnel sur les roues arrière 22, ou imposer un changement du rapport de la boîte de vitesses 4 afin d'utiliser un rapport plus démultiplié délivrant un couple plus important sur les roues avant 6. Le choix entre ces deux solutions sera basé principalement sur la volonté du conducteur, le potentiel de couple disponible à partir de la machine électrique arrière 20, le niveau d'accélération véhicule de confort 43, et le niveau d'énergie présent dans les batteries haute tension 16.

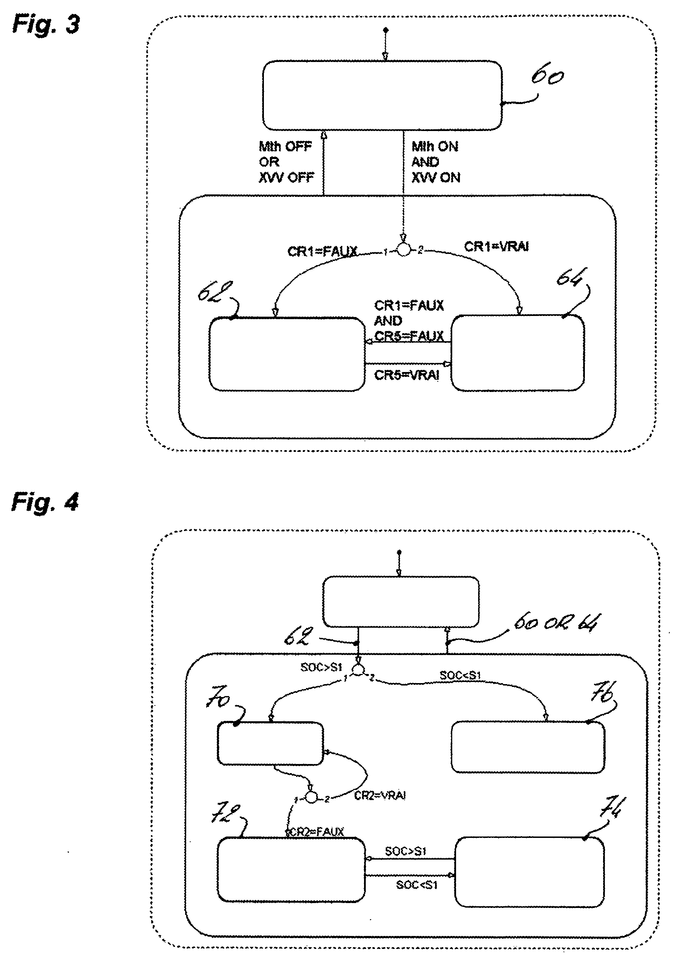

La figure 3 présente une première étape du procédé, comportant une initialisation 60 qui vérifie si le moteur thermique est en fonctionnement Mth ON, et si le système de contrôle de vitesse est activé XVV ON, pour passer à un premier critère CR1 qui vérifie si ce moteur thermique est capable de fournir le couple de consigne 49.

Si le premier critère CR1 n'est pas respecté, le moteur thermique ne pouvant pas délivrer le couple de consigne 49 assurant l'accélération de confort 43 avec le rapport de la boîte de vitesses en cours d'utilisation, alors le procédé de limitation du couple s'active 62. Dans le cas contraire le procédé de limitation du couple ne s'active pas 64, et le fonctionnement du véhicule reste dans des conditions nominales.

Un deuxième critère CR5 vérifie si le moteur thermique n'est pas capable de respecter le couple de consigne 49 sans aucun délestage, et si la consigne de vitesse véhicule 32 est proche de la consigne de vitesse cible donnée par le système de contrôle de vitesse.

La figure 4 présente une deuxième étape en cas d'activation du procédé de limitation du couple, comprenant un troisième critère SOC>S1 sur le niveau de charge des batteries haute tension 16, qui effectue un premier délestage de la régulation de ce niveau de charge 70 dans un premier temps si ce niveau est supérieur à un seuil prédéfini S1.

Dans le cas du délestage du niveau de charge 70, un quatrième critère CR2 vérifie si le moteur thermique avec ce délestage est capable de respecter le couple de consigne 49 construit avec le critère d'accélération de confort 43.

Dans le cas où le moteur thermique n'est pas capable de respecter le couple de consigne 49 avec un maintien du premier délestage 72, ou après un arrêt de ce délestage 74 en fonction de l'évolution du niveau de charge des batteries haute tension 16, et dans le cas où le premier délestage n'est pas autorisé 74, on a alors un passage du procédé de limitation de couple à une étape suivante.

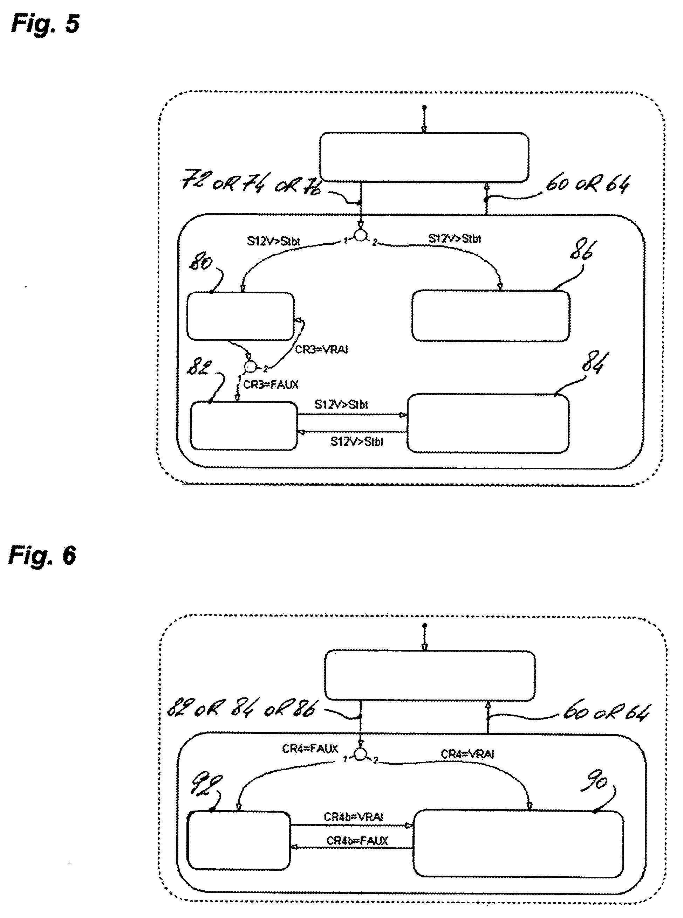

La figure 5 présente la troisième étape comprenant un deuxième délestage de la batterie basse tension 80, comportant généralement une tension de 12V, qui sera dans un premier temps effectué si le niveau de charge dans cette batterie est supérieur à un seuil prédéterminé Stbt suivant un cinquième critère S12V>Stbt.

Dans le cas du deuxième délestage, un sixième critère CR3 vérifie si le moteur thermique avec les délestages effectués est capable de respecter le couple de consigne 49. Dans le cas où le moteur thermique n'est pas capable de respecter le couple de consigne 49, avec un maintien du deuxième délestage 82, ou après un arrêt de ce délestage 84 en fonction de l'évolution du niveau de charge de la batterie basse tension 16, et dans le cas où le deuxième délestage n'est pas autorisé 86, on a alors un passage du procédé de limitation de couple à une étape suivante.

La figure 6 présente la quatrième étape comprenant un septième critère CR4 qui détermine s'il est préférable de forcer l'engagement de la machine électrique arrière 90 pour respecter l'accélération de confort 43, ou de passer à un rapport de la boîte de vitesses donnant une démultiplication plus élevée 92. Le septième critère CR4 dépend principalement de la volonté du conducteur, de l'accélération de confort 43, de la vitesse véhicule 32 et du niveau de charge des batteries haute tension 16.

Le procédé a donc pour chaque étape de fonctionnement un seul état qui est sélectionné, et passe d'un état à l'autre par un critère de sélection CRX. Les critères de sélection CRX peuvent dépendre de plusieurs paramètres, comprenant notamment la vitesse du véhicule, et le mode de fonctionnement de ce véhicule choisi par le conducteur.

Les seuils prédéterminés S1 et Stbt dépendent principalement de la vitesse du véhicule, et comportent avantageusement une hystérésis donnant un écart suivant que la charge des batteries augmente ou diminue, afin d'éviter une instabilité de la commande.

En particulier dans un exemple de réalisation, on peut avoir une puissance de charge par la machine électrique avant 12 pour alimenter la batterie basse tension 10 du réseau de bord, où les batteries haute tension 16, qui est de l'ordre de 2kW. La puissance de délestage correspondante donne un couple supplémentaire aux roues motrices avant 6 qui dépend de la vitesse du véhicule, ce couple peut être de l'ordre de 120Nm pour une vitesse du véhicule de 20km/h.

La machine électrique arrière 20 peut donner dans un exemple de réalisation une puissance maximum de 27kW, et délivrer un couple aux roues de l'ordre 1500Nm pour une vitesse du véhicule de 20km/h, qui peut venir s'ajouter dans certains cas de fonctionnement du procédé pour obtenir l'accélération du véhicule demandé.

Dans le cas où ces couples sont insuffisants pour obtenir l'accélération du véhicule demandé, le procédé peut alors commander un changement du rapport de la boîte de vitesses 4.

Par ce procédé, on évite ainsi au maximum un changement du rapport de la transmission, ce qui améliore le confort de conduite. On peut aussi optimiser la consommation de carburant.

## Revendications

1. Procédé pour un véhicule hybride, de limitation du couple prélevé par une première machine électrique (12) liée à un moteur thermique de traction (2) qui entraîne ce véhicule par une transmission comprenant différents rapports (4), cette première machine étant prévue pour alimenter en courant une batterie basse tension (10) du réseau de bord du véhicule, ainsi qu'un dispositif de stockage de l'énergie (16) qui délivre cette énergie à une deuxième machine électrique de traction (20), le véhicule comportant un système automatique de contrôle de sa vitesse pour la réguler ou la limiter, dans le cas où le moteur thermique (2) ne peut pas sur un même rapport de la transmission (4), en réponse à une demande du système automatique de contrôle de vitesse, délivrer une accélération du véhicule suffisante correspondant à un niveau de confort (43), le procédé déleste alors la charge du dispositif de stockage de l'énergie (16), ou de la batterie basse tension (10) du réseau de bord, ledit procédé comportant une première fonction d'estimation des efforts résistants (30), qui reçoit une information sur la vitesse du véhicule (32) et sur le couple que fournit le moteur thermique (34) et la deuxième machine électrique de traction (20), afin d'estimer les efforts résistants (31) s'appliquant sur le véhicule au cours du roulage, cette estimation étant donnée à une fonction suivante de calcul de l'accélération maximum possible du véhicule sur le rapport engagé de la transmission (36), qui reçoit de plus une information sur le couple maximum ramené à la roue (38) que peuvent délivrer les différentes motorisations (2, 20) dans leur état actuel de fonctionnement, afin de calculer cette accélération véhicule maximum possible (37), **caractérisé en ce que** l'accélération véhicule maximum possible (37) est délivrée à une fonction suivante de calcul de l'accélération maximum de consigne (40), qui reçoit de plus une information d'accélération véhicule de confort (43) définie par des cartographies en fonction de la vitesse du véhicule, et de l'écart entre la consigne de vitesse donnée par le système automatique de contrôle de vitesse, et la vitesse réelle de ce véhicule, cette fonction calculant le niveau d'accélération maximum de consigne (41) disponible pour satisfaire aux demandes du système de contrôle de vitesse, en prenant la valeur la plus élevée entre l'accélération véhicule maximum possible (37), et l'accélération véhicule de confort 43, cette accélération maximum de consigne (41) étant délivrée à une fonction suivante de calcul de l'accélération de consigne (44), qui reçoit de plus une information sur l'accélération demandée par le système de contrôle de vitesse (46), pour calculer une accélération de consigne (45) qui est cette valeur de l'accélération demandée par ce système de contrôle, limitée par l'accélération maximum de consigne (41).

2. Procédé de limitation de couple selon la revendication 1, **caractérisé en ce qu'**il comporte une première étape comprenant une initialisation (60), qui vérifie si le moteur thermique est en fonctionnement (Mth ON), et si le système de contrôle de vitesse est activé (XVV ON), pour passer à un premier critère (CR1) qui vérifie si ce moteur thermique est capable de fournir le couple de consigne (49) assurant l'accélération de confort (43) avec le rapport de la transmission en cours d'utilisation, alors le procédé de limitation du couple s'active (62), dans le cas contraire ce procédé ne s'active pas (64) et le fonctionnement du véhicule reste dans des conditions nominales, puis pour passer à un deuxième critère (CR5) vérifiant si le moteur thermique (2) n'est pas capable de respecter le couple de consigne (49) sans aucun délestage, et si la consigne de vitesse véhicule (32) est proche de la consigne de vitesse cible donnée par le système de contrôle de vitesse.

3. Procédé de limitation de couple selon la revendication 2, **caractérisé en ce qu'**il comporte une deuxième étape en cas d'activation du procédé de limitation du couple, comprenant un troisième critère (SOC>S1) sur le niveau de charge des batteries haute tension (16), qui effectue un délestage de la régulation de ce niveau de charge (70) si ce niveau est supérieur à un seuil prédéfini (S1), et dans le cas de ce délestage un quatrième critère (CR2) qui vérifie si le moteur thermique avec ce délestage est capable de respecter le couple de consigne (49) construit avec le critère d'accélération de confort (43).

4. Procédé de limitation de couple selon la revendication 3, **caractérisé en ce qu'**il comporte une troisième étape dans le cas où le moteur thermique (2) n'est pas capable de respecter le couple de consigne (49) avec un maintien du délestage (72), ou après un arrêt du délestage (74) en fonction de l'évolution du niveau de charge des batteries haute tension (16), et dans le cas où le délestage n'est pas autorisé (74), cette troisième étape comprenant un délestage de la batterie basse tension (80), qui sera dans un premier temps effectué si le niveau de charge dans cette batterie (10) est supérieur à un seuil prédéterminé (Stbt) suivant un cinquième critère (S12V>Stbt), dans le cas de ce délestage, un sixième critère (CR3) vérifie si le moteur thermique avec les délestages effectués est capable de respecter le couple de consigne (49).

5. Procédé de limitation de couple selon la revendication 4, **caractérisé en ce qu'**il comporte une quatrième étape dans le cas où le moteur thermique (2) n'est pas capable de respecter le couple de consigne (49), avec un maintien du délestage (82), ou après un arrêt du délestage (84) en fonction de l'évolution du niveau de charge de la batterie basse tension (16), et dans le cas où le délestage n'est pas autorisé (86), comprenant un septième critère (CR4) qui détermine s'il est préférable de forcer l'engagement de la machine électrique arrière (90) pour respecter l'accélération de confort (43), ou de passer à un rapport de la transmission donnant une démultiplication plus élevée (92).

6. Véhicule hybride disposant d'une première machine électrique (12) couplée à un moteur thermique de traction (2) qui entraîne ce véhicule par une transmission comprenant différents rapports (4), cette première machine étant prévue pour alimenter en courant une batterie basse tension (10) du réseau de bord du véhicule, ainsi qu'un dispositif de stockage de l'énergie (16) qui délivre cette énergie à une deuxième machine électrique de traction (20), le véhicule comportant un système automatique de contrôle de sa vitesse pour la réguler ou la limiter, ce véhicule mettant en oeuvre un procédé de limitation du couple prélevé par la première machine électrique (12), **caractérisé en ce que** ce procédé est réalisé selon l'une quelconque des revendications précédentes.

7. Véhicule hybride selon la revendication 6, **caractérisé en ce que** le moteur thermique (2) entraîne les roues avant (6), et la deuxième machine électrique (20) entraîne les roues arrière (22).

## Patentansprüche

1. Verfahren für ein Hybridfahrzeug zur Begrenzung des Drehmoments, das von einem ersten Elektromotor (12) abgenommen wird, der mit einer Antriebsbrennkraftmaschine (2) verbunden ist, die dieses Fahrzeug über ein Getriebe antreibt, das diverse Gänge (4) umfasst, wobei dieser erste Motor vorgesehen ist, um eine Niederspannungsbatterie (10) des Bordnetzwerks des Fahrzeugs mit Strom zu versorgen, sowie mit einer Speichervorrichtung der Energie (16), die diese Energie zu einem zweiten Antriebselektromotor (20) liefert, wobei das Fahrzeug ein automatisches Steuersystem seiner Geschwindigkeit umfasst, um sie zu regulieren oder zu begrenzen, falls die Brennkraftmaschine (2) auf ein und demselben Gang des Getriebes (4) als Reaktion auf eine Anfrage des automatischen Geschwindigkeitssteuersystems keine ausreichende Beschleunigung des Fahrzeugs, die einem Komfortniveau (43) entspricht, liefern kann, wobei das Verfahren die Ladung der Energiespeichervorrichtung (16) oder der Niederspannungsbatterie (10) des Fahrzeugnetzwerks abwirft, wobei das Verfahren eine erste Schätzungsfunktion der Widerstandskräfte (30) umfasst, die eine Information über die Geschwindigkeit des Fahrzeugs (32) und über das Drehmoment, das die Brennkraftmaschine (34) und der zweite Antriebselektromotor (20) liefern, empfängt, um die Widerstandskräfte (31) zu schätzen, die auf das Fahrzeug im Laufe des Fahrens angelegt werden, wobei diese Schätzung an eine darauf folgende Funktion zur Berechnung der maximal möglichen Beschleunigung des Fahrzeugs auf dem eingerückten Gang des Getriebes (36) gegeben wird, die außerdem eine Information über das maximale Drehmoment in Bezug auf das Rad (38) empfängt, das die unterschiedlichen Motorisierungen (2, 20) in ihrem aktuellen Betriebszustand liefern können, um diese maximal mögliche Fahrzeugbeschleunigung (37) zu berechnen, **dadurch gekennzeichnet, dass** die maximal mögliche Beschleunigung des Fahrzeugs (37) an eine darauffolgende Funktion zur Berechnung der maximalen Sollbeschleunigung (40) geliefert wird, die außerdem eine Komfort-Fahrzeugbeschleunigungsinformation (43) empfängt, die von Kartographien in Abhängigkeit von der Geschwindigkeit des Fahrzeugs definiert wird, und des Unterschieds zwischen dem von dem automatischen Geschwindigkeitssteuersystem gegebenen Sollwert und der realen Geschwindigkeit dieses Fahrzeugs, wobei diese Funktion das maximal verfügbare Sollbeschleunigungsniveau (41) zum Decken der Nachfragen des Geschwindigkeitssteuersystems berechnet, indem der höchste Wert zwischen der maximal möglichen Beschleunigung des Fahrzeugs (37) und der Komfort-Fahrzeugbeschleunigung (43) genommen wird, wobei diese maximale Sollbeschleunigung (41) an eine darauffolgende Funktion zum Berechnen der Sollbeschleunigung (44) geliefert wird, die außerdem eine Information über die von dem Geschwindigkeitssteuersystem (46) geforderte Beschleunigung empfängt, um eine Sollbeschleunigung (45) zu berechnen, die dieser von diesem Steuersystem verlangte Beschleunigungswert, begrenzt durch die maximale Sollbeschleunigung (41) ist.

2. Verfahren zur Drehmomentbegrenzung nach Anspruch 1, **dadurch gekennzeichnet, dass** es einen ersten Schritt umfasst, der eine Initialisierung (60) umfasst, die prüft, ob die Brennkraftmaschine in Betrieb ist (Mth ON) und ob das Geschwindigkeitssteuersystem aktiviert ist (XVV ON), um zu einem ersten Kriterium (CR1) überzugehen, das prüft, ob diese Brennkraftmaschine fähig ist, das Solldrehmoment (49) zu liefern, das die Komfortbeschleunigung (43) mit dem Gang des Getriebes, der gerade verwendet wird, sicherstellt, während sich das Begrenzungsverfahren des Drehmoments (62) aktiviert, wobei sich im gegenteiligen Fall dieses Verfahren nicht aktiviert (64) und der Betrieb des Fahrzeugs in den Nennzuständen bleibt, um dann auf ein zweites Kriterium (CR5) überzugehen, das prüft, ob die Brennkraftmaschine (2) nicht fähig ist, das Solldrehmoment (49) ohne irgendein Abwerfen einzuhalten, und ob der Geschwindigkeitssollwert des Fahrzeugs (32) nahe dem Zieldrehzahlwert, der von dem Geschwindigkeitssteuersystem gegeben wird, liegt.

3. Verfahren zur Drehmomentbegrenzung nach Anspruch 2, **dadurch gekennzeichnet, dass** es einen zweiten Schritt im Fall der Aktivierung des Verfahrens zur Drehmomentbegrenzung umfasst, der ein drittes Kriterium (SOC>S1) auf dem Ladungspegel der Hochspannungsbatterien (16) umfasst, der ein Abwerfen zur Regulierung dieses Ladungspegels (70) ausführt, falls der Pegel höher ist als ein vorbestimmter Schwellenwert (S1), und in dem Fall dieses Abwerfens ein viertes Kriterium (CR2), das prüft, ob die Brennkraftmaschine mit diesem Abwerfen fähig ist, das Solldrehmoment (49), das mit dem Komfortbeschleunigungskriterium (43) aufgebaut wird, einzuhalten.

4. Verfahren zur Drehmomentbegrenzung nach Anspruch 3, **dadurch gekennzeichnet, dass** es einen dritten Schritt in dem Fall umfasst, in dem die Brennkraftmaschine (2) nicht fähig ist, das Solldrehmoment (49) mit einer Aufrechterhaltung des Abwerfens (72) oder nach einem Stoppen des Abwerfens (74) in Abhängigkeit von der Entwicklung des Ladungspegels der Hochspannungsbatterien (16) einzuhalten, und in dem Fall, in dem das Abwerfen nicht gestattet ist (74), dieser dritte Schritt ein Abwerfen der Niederspannungsbatterie (80) umfasst, das zuerst ausgeführt wird, falls der Ladungspegel in dieser Batterie (10) höher ist als ein vorbestimmter Schwellenwert (Stbt) gemäß einem fünften Kriterium (S12V>Stbt), in dem Fall dieses Abwerfens ein sechstes Kriterium (CR3) prüft, ob die Brennkraftmaschine mit den ausgeführten Abwürfen fähig ist, das Solldrehmoment (49) einzuhalten.

5. Verfahren zur Drehmomentbegrenzung nach Anspruch 4, **dadurch gekennzeichnet, dass** es einen vierten Schritt umfasst, bei dem die Brennkraftmaschine (2) nicht fähig ist, das Solldrehmoment (49) mit einer Aufrechterhaltung des Abwerfens (82) oder nach einem Stoppen des Abwerfens (84) in Abhängigkeit von der Entwicklung des Ladungspegels der Niederspannungsbatterie (16) einzuhalten, und in dem Fall, in dem dieses Abwerfen nicht gestattet ist (86), ein siebtes Kriterium (CR4) umfasst, das bestimmt, ob es vorzuziehen ist, den hinteren Elektromotor (90) einzurücken, um die Komfortbeschleunigung (43) einzuhalten oder auf einen Gang des Getriebes, der eine höhere Übersetzung (92) gibt, überzugehen.

6. Hybridfahrzeug, das über einen ersten Elektromotor (12) verfügt, der mit einer Antriebsbrennkraftmaschine (2) gekoppelt ist, die dieses Fahrzeug durch ein Getriebe antreibt, das diverse Gänge (4) umfasst, wobei dieser erste Motor vorgesehen ist, um eine Niederspannungsbatterie (10) des Bordnetzwerks des Fahrzeugs mit Strom zu versorgen, sowie eine Speichervorrichtung der Energie (16), die diese Energie an einen zweiten Antriebselektromotor (20) liefert, wobei das Fahrzeug ein automatisches Steuersystem seiner Geschwindigkeit umfasst, um sie zu regulieren oder zu begrenzen, wobei dieses Fahrzeug ein Begrenzungsverfahren des Drehmoments, das von dem ersten Elektromotor (12) abgenommen wird, umsetzt, **dadurch gekennzeichnet, dass** dieses Verfahren nach einem der vorhergehenden Ansprüche ausgeführt wird.

7. Hybridfahrzeug nach Anspruch 6, **dadurch gekennzeichnet, dass** die Brennkraftmaschine (2) die Vorderräder (6) antreibt und der zweite Elektromotor (20) die Hinterräder (22) antreibt.

## Claims

1. A method for a hybrid vehicle for limiting the torque drawn by a first electric machine (12) linked to a traction combustion engine (2) which drives this vehicle by a transmission including different ratios (4), this first machine being provided to supply current to a low voltage battery (10) of the on-board network of the vehicle and also an energy storage device (16) which delivers said energy to a second traction electric machine (20), the vehicle comprising an automatic system for controlling its speed for regulating or limiting it, in the case where the combustion engine (2) is not able, on a given ratio of the transmission (4), in response to a request from the automatic speed control system, to deliver a sufficient acceleration of the vehicle corresponding to a preferred level(43), the method thus sheds the load of the energy storage device (16), or of the low voltage battery (10) of the on-board network, said method comprising a first function of estimation of the resisting forces (30), which receives information on the speed of the vehicle (32) and on the torque supplied by the combustion engine (34) and the second traction electric machine (20), so as to estimate the resisting forces (31) applying on the vehicle during travel, this estimation being given to a subsequent calculation function of the maximum possible acceleration of the vehicle on the engaged ratio of the transmission (36), which receives in addition information on the maximum torque brought to the wheel (38) which the different engines (2, 30) can deliver in their current operating state, so as to calculate this maximum possible vehicle acceleration (37), **characterized in that** the maximum possible vehicle acceleration (37) is delivered to a subsequent function for calculation of the maximum setpoint acceleration (40), which receives in addition preferred vehicle acceleration information (43) defined by mappings as a function of the speed of the vehicle, and of the gap between the speed setpoint given by the automatic speed control system, and the actual speed of this vehicle, this function calculating the setpoint maximum acceleration level (41) available to meet the demands of the speed control system, taking the highest value between the maximum possible vehicle acceleration (37), and the preferred vehicle acceleration (43), this setpoint maximum acceleration (41) being delivered to a subsequent function for calculation of the setpoint acceleration (44), which receives in addition information on the acceleration requested by the speed control system (46), to calculate a setpoint acceleration (45) which is this acceleration value requested by this control system, limited by the setpoint maximum acceleration (41).

2. The method for limiting torque according to Claim 1, **characterized in that** it comprises a first step including an initialisation (60), which verifies if the combustion engine is in operation (Mth ON), and if the speed control system is activated (XVV ON), to pass to a first criterion (CR1) which verifies if this combustion engine is capable of providing the setpoint torque (49) ensuring the preferred acceleration (43) with the ratio of the transmission in the course of being used, then the limitation method of the torque is activated (62), in the opposite case, this method is not activated (64) and the functioning of the vehicle remains in nominal conditions, then to pass to a second criterion (CR5), verifying if the combustion engine (2) is not capable of complying with the setpoint torque (49) without any shedding, and if the vehicle speed setpoint (32) is close to the target speed setpoint given by the speed control system.

3. The method for limiting torque according to Claim 2, **characterized in that** it comprises a second step in the case of activation of the torque limitation method including a third criterion (SOC>S1) on the charge level of the high voltage batteries (16), which carries out a shedding of the regulation of this charge level (70) if this level is greater than a predefined threshold (S1), and in the case of this shedding, a fourth criterion (CR2) which verifies if the combustion engine with this shedding is capable of complying with the setpoint torque (49) constructed with the preferred acceleration criterion (43).

4. The method for limiting torque according to Claim 3, **characterized in that** it comprises a third step in the case where the combustion engine (2) is not capable of complying with the setpoint torque (49) with a maintaining of shedding (72), or after a cessation of shedding (74) as a function of the evolution of the charge level of the high voltage batteries (16), and in the case where the shedding is not permitted (74), this third step including a shedding of the low voltage battery (80), which will be initially carried out if the charge level in this battery (10) is greater than a predetermined threshold (Stbt) following a fifth criterion (S12V>Stbt), in the case of this shedding, a sixth criterion (CR3) verifies if the combustion engine with the sheddings carried out is capable of complying with the setpoint torque (49).

5. The method for limiting torque according to Claim 4, **characterized in that** it comprises a fourth step in this case where the combustion engine (2) is not capable of complying with the setpoint torque (49), with a maintaining of the shedding (82), or after a cessation of the shedding (84) as a function of the evolution of the charge level of the low voltage battery (16), and in the case where the shedding is not permitted (86), including a seventh criterion (CR4) which determines if it is preferable to force the engagement of the rear electric machine (90) to comply with the preferred acceleration (43), or to pass to a transmission ratio giving a higher reduction (92).

6. A hybrid vehicle having a first electric machine (12) coupled to a traction combustion engine (2) which drives this vehicle by a transmission including different ratios (4), this first machine being provided to supply current to a low voltage battery (10) of the on-board network of the vehicle, and also an energy storage device (16) which delivers this energy to a second traction electric machine (20), the vehicle comprising an automatic system for controlling its speed, for regulating it or limiting it, this vehicle implementing a method for limiting the torque drawn by the first electric machine (12), **characterized in that** this method is realized according to any one of the preceding claims.

7. The hybrid vehicle according to Claim 6, **characterized in that** the combustion engine (2) drives the front wheels (6), and the second electric machine (20) drives the rear wheels (22).
